Europäisches Patentamt

European Patent Office

Office européen des brevets

(19)

(11) EP 1 273 773 A2

(12) # EUROPEAN PATENT APPLICATION

(43) Date of publication:
08.01.2003 Bulletin 2003/02

(51) Int Cl.7: **F01N 3/08**, F02D 41/02

(21) Application number: 02013974.7

(22) Date of filing: 25.06.2002

(84) Designated Contracting States:
AT BE CH CY DE DK ES FI FR GB GR IE IT LI LU
MC NL PT SE TR
Designated Extension States:
AL LT LV MK RO SI

(30) Priority: 02.07.2001 JP 2001201394

(71) Applicant: TOYOTA JIDOSHA KABUSHIKI
KAISHA
Aichi-ken 471-8571 (JP)

(72) Inventors:
• Hayashi, Kotaro
Toyota-shi, Aichi-ken 471-8571 (JP)

• Matsushita, Souichi
Toyota-shi, Aichi-ken 471-8571 (JP)
• Ohki, Hisashi
Toyota-shi, Aichi-ken 471-8571 (JP)
• Ohkawara, Seiji
Toyota-shi, Aichi-ken 471-8571 (JP)

(74) Representative:
Winter, Brandl, Fürniss, Hübner, Röss, Kaiser,
Polte Partnerschaft
Patent- und Rechtsanwaltskanzlei
Alois-Steinecker-Strasse 22
85354 Freising (DE)

(54) **Exhaust gas purifying system for an internal combustion engine**

(57) An engine is provided with an NOx catalyst (42A) in its exhaust system (40) and an amount of reduction components (HC components) in the exhaust gas is suitably increased through a fuel adjunction nozzle to thereby attain the NOx purification effect by the catalyst (42A). Only precious metal catalyst is carried in an upstream side portion R1 as the exhaust gas flow path in a honeycomb-shaped structure forming the NOx catalyst (42A) but no NOx absorbent is carried therein. Also, both the precious metal catalyst and the NOx absorbent are carried at a predetermined density in a downstream side portion R2 as the exhaus gas flow path in the honeycomb-shaped structure forming the NOx catalyst (42A).

【FIG. 2】

## Description

### 1. TECHNICAL FIELD OF THE INVENTION

The present invention relates to an exhaust gas purifying system for purifying harmful components and particulate matters which are contained in exhaust gas of an internal combustion engine and, more particularly, to an exhaust gas purifying system for an internal combustion engine which is provided with catalyst for accelerating reduction reaction of NOx in an exhaust passage and has a function to increase reduction components contained in the exhaust gas to be introduced into its catalyst.

### 2. BACKGROUND ART

In general, in an internal combustion engine, for example, such as a diesel engine, performing the engine operation by combustion of a mixture of a high air/fuel ratio (lean atmosphere) in a wide driving range, an NOx catalyst having the function to purifying nitrogen oxide (NOx) in exhaust gas is provided in an exhaust passage thereof. For instance, as NOx catalyst, a honeycomb structure (carrier) of porous ceramic carrying both NOx absorbent having an ability to absorb NOx under the existence of oxygen and precious metal catalyst (precious metal) having an ability to oxidize hydrocarbon (HC) (for example, an engine disclosed in JP 2000-73748 A) is frequently used.

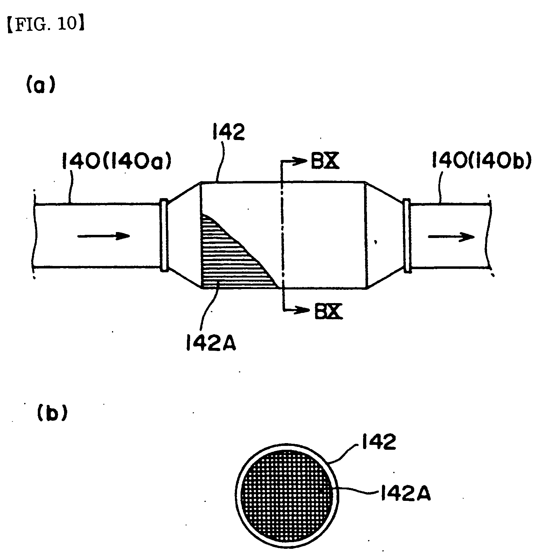

For example, Fig. 10 (a) is a schematic view showing one example using conformation of NOx catalyst that is well known conventionally. Incidentally, Fig. 10 (a) is a side view showing an outer appearance of a catalyst casing for receiving the NOx catalyst in a state of a outer hull of the catalyst casing being partially cleared away. Fig. 10(b) is a cross-sectional view showing a cross-section taken along the line BX-BX of 10(a).

As shown in Figs. 10(a) and 10(b), the catalyst casing 142 provided in a midway of the exhaust passage 140 of an internal combustion engine incorporates therein the NOx catalyst 142A. The NOx catalyst 142A is composed to carry NOx absorbent and precious metal catalyst in a honeycomb-shaped structure. The exhaust gas within the exhaust passage 140 is introduced from an upstream side passage (140a) into the catalyst casing 142 as indicated by the arrow and passes through the honeycomb-shaped passage structure (142A) to a downstream side passage 140b.

The NOx catalyst 142A purifies the harmful components, such as NOx or the like, contained in the exhaust gas basically by the following mechanism.

Namely, the NOx absorbent has characteristics to absorb NOx under the condition in which the oxygen concentration in the exhaust gas is high and to discharge NOx under the condition in which the oxygen concentration in the exhaust gas is low. Also, when the NOx is discharged into the exhaust gas, if there is HC, CO or the like in the exhaust gas, the oxidation reaction of HC or CO is accelerated by the precious metal catalyst so that the oxidation reduction reaction to make NOx into oxidation components and to make HC or CO into reduction components takes place between both. Namely, HC or CO is oxidized into $CO_2$ or $H_2O$ and NOx is reduced into $N_2$.

By the way, even if the oxygen concentration in the exhaust gas is high, when the NOx catalyst (NOx absorbent) absorbs a predetermined limit amount of NOx, the catalyst no longer absorbs the NOx. Therefore, the internal combustion engine having such an NOx catalyst in the exhaust passage generally discharges, reduces and purifies the NOx absorbed in the NOx catalyst by feeding reducing agents such as light oil or the like into the exhaust passage in the upstream of the NOx catalyst before the NOx absorbing amount of the NOx catalyst reaches the limit level and thereby restore the NOx absorbing ability of the NOx catalyst, and generally repeats such control catalyst at a predetermined interval.

However, when the reducing agents such as light oil or the like is fed into the exhaust gas passage, the reducing agents (particularly, its high boiling point components) work as binders so that particulate matters (such as smoke) is likely to be formed in the exhaust gas.

The particulate matters formed in the exhaust gas is accumulated in the structure of the NOx catalyst, in particular, on an end face of the structure facing the upstream side of the exhaust gas passage. There is fear that this end face would be clogged. Such accumulation of the particulate matters to the NOx catalyst or the clogging of the structure end face due to the accumulation of the particulate matters causes various defects such as deterioration in efficiency of the exhaust gas purification by the NOx catalyst, the reduction in fuel consumption rate or engine output due to the increase of the back pressure to the internal combustion engine from the exhaust gas passage.

In view of the foregoing defects, the present invention is invented. An object of the present invention is to provide an exhaust gas purifying system for an internal combustion engine that can suitably suppress the accumulation of particulate matters in exhaust gas into an exhaust gas purifying catalyst in the exhaust gas for an internal combustion engine, which carries the exhaust gas purifying catalyst including NOx absorbent for absorbing and discharging NOx in response to a reduction component amount in the exhaust gas.

### 3. STSTEMENT OF INVENTION

In order to attain this and other objects, according to the present invention, there is provided an exhaust gas purifying system for an internal combustion engine for purifying harmful components contained in exhaust gas of the internal combustion engine, including an exhaust gas purifying catalyst provided in an exhaust gas flow path of the internal combustion engine which carries, on a carrier, a NOx absorbent absorbing NOx in the exhaust gas in the case where an oxygen concentration in the exhaust gas is high and discharging an absorbed NOx in the case where the oxygen concentration is low, together with precious metal, and a reduction component amount increasing means for increasing an amount of reduction components in the exhaust gas introduced into the exhaust gas purifying catalyst, wherein a smaller amount of a carried NOx absorbent in the carrier is distributed on an upstream side along the exhaust gas flow path and a larger amount of the carried NOx absorbent on the carrier is distributed on a downstream side along the exhaust gas flow path.

Incidentally, it is preferable that the reduction components to be increased contain hydrocarbon (HC).

In the case where the precious metal having the function to accelerate the oxidation of the components that are present in the exhaust gas is exposed in the exhaust gas under the condition carried on a predetermined carrier together with the NOx absorbent, the larger the carried amount of the NOx absorbent to the carrier, the lower the effectiveness of the precious metal will become. Namely, according to this constitution, in the case where the amount of the reduction components contained in the exhaust gas introduced into the exhaust gas purifying catalyst is increased, the catalyst effect of the precious metal for accelerating the oxidation of the reduction components is relatively increased on the upstream side in comparison with the downstream side of the exhaust gas flow path. For this reason, since the reduction components in the exhaust gas is effectively oxidized (decomposed) in the inflow portion for the exhaust gas introduced in the exhaust gas purifying catalyst or the vicinity thereof, the formation of the particulate matters such as smoke or the like is difficult in the inflow portion or the vicinity thereof. Accordingly, it is possible to prevent or suppress suitably the clogging of the exhaust gas purifying catalyst due to the accumulation or the like of the particulate matters.

Also, in the constitution of the present invention, the amount of carried NOx absorbent on the carrier is kept uniform but the carried amount of the precious metal may be largely distributed on the upstream side and less distributed on the downstream side along the exhaust gas flow path.

Also, according to another invention, there is provided an exhaust gas purifying system for an internal combustion engine for purifying harmful components contained in exhaust gas of the internal combustion engine, including an exhaust gas purifying catalyst provided in an exhaust gas flow path of the internal combustion engine which carries, on a carrier, a NOx absorbent absorbing NOx in the exhaust gas in a case where an oxygen concentration in the exhaust gas is high and discharging an absorbed NOx in a case where the oxygen concentration is low, together with precious metal, an oxidation catalyst provided in an upstream of the exhaust gas purifying catalyst in the exhaust gas flow path and having a function to oxidation components in the exhaust gas, and a reduction component amount increasing means for increasing an amount of reduction components in the exhaust gas introduced into the oxidation catalyst.

With such this constitution, the increased reduction components is oxidized (decomposed) by the oxidation catalyst before entrance into the exhaust gas purifying catalyst and is changed into components having at least a lower boiling point. For this reason, the remarkable formation of particulate matters is suppressed in the exhaust gas purifying catalyst, in particular, in the inflow portion of the exhaust gas (upstream end) or the vicinity thereof. Accordingly, it is possible to prevent or suppress suitably the clogging of the exhaust gas purifying catalyst due to the accumulation or the like of the particulate matters.

Also, it is preferable that the carrier of the exhaust gas purifying catalyst be a honeycomb-shaped structure.

According to such this constitution, since there is no fear that the particulate matters are accumulated on the upstream end face and thus the end face is clogged in the honeycomb-shaped structure, the purifying function of the exhaust gas by the exhaust gas purifying catalyst is maintained suitable for a long period of time.

Also, it is preferable that the function to collect the particulate matters in the exhaust gas is not exhibited in the upstream side of the exhaust gas purifying catalyst of the exhaust gas flow path.

With such this constitution, the formation of the particulate matters in the exhaust gas is suppressed to thereby effectuate the function on the basis of the respective components such as preventing or suppressing the clogging of the exhaust gas purifying catalyst.

DESCRIPTION DRAWINGS

In the accompanying drawings:

Fig. 1 is a schematic structural view showing a diesel engine system in accordance with a first embodiment of the present invention;
Fig. 2 is an side view enlarging and showing a catalyst casing in accordance with the embodiment together with a part of its inner structure;
Figs. 3(a) and 3(b) are a front elevational view or the like showing a inlet of exhaust gas with respect to a part of a particulate filter in accordance with the embodiment;
Fig. 4 is a time chart showing a transition of NOx concentration observed in the downstream of the NOx catalyst when the fuel adjunction control is to be executed;
Fig. 5 is a flowchart showing the fuel adjunction control order in accordance with the embodiment;

Fig. 6 is a schematic structural view showing a diesel engine system in accordance with a second embodiment of the present invention;

Fig. 7 is a side view enlarging and showing a composite catalyst casing in accordance with the embodiment together with a part of its inner structure;

Fig. 8 is a schematic structural view showing a diesel engine system in accordance with a third embodiment of the present invention;

Fig. 9 is a side view enlarging and showing a filter casing in accordance with the embodiment together with a part of its inner structure; and

Fig. 10 is a schematic view showing one example of a conventional NOx catalyst usage.

## DESCRIPTION OF SPECIFIC EMBODIMENT

(First Embodiment)

Hereinafter an exhaust gas purifying system for an internal combustion engine according to a first embodiment of the present invention applied to a diesel engine system will be described.

<Structure and Function of Engine System Structure>

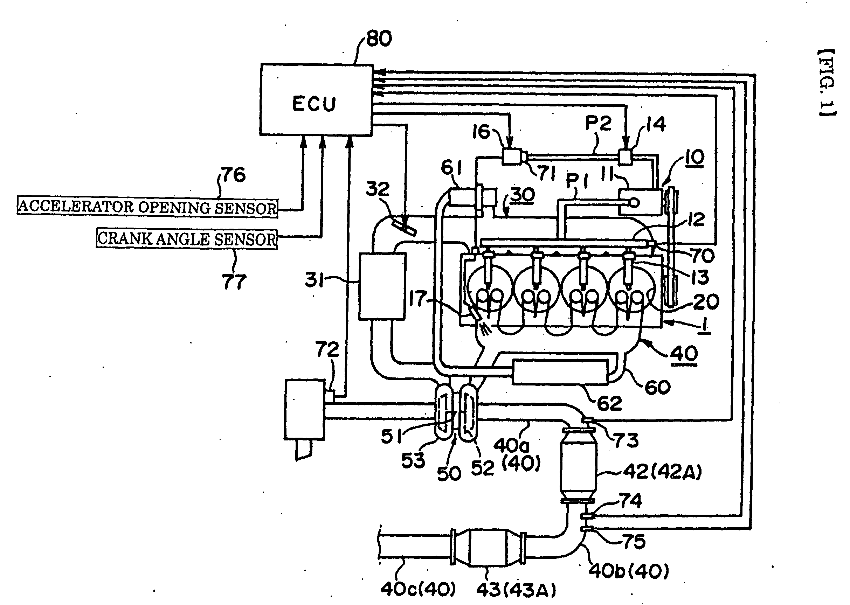

In Fig. 1, an internal combustion engine (hereinafter referred to as an engine) 1 is an in-line four-cylinder diesel engine system composed of main parts of a fuel feeding system 10, combustion chambers 20, an intake system 30, an exhaust system 40, and the like.

First of all, the fuel feeding system 10 is composed of a supply pump 11, a common rail 12, fuel injection valves 13, an blocking valve 14, a regulator valve 16, a fuel adjunction nozzle 17, an engine fuel passage P1, an adjunction fuel passage P2 and the like.

The supply pump 11 is adapted pressurize fuel pumped up from a fuel tank (not shown) and feed the fuel through the engine fuel passage P1 to the common rail 12. The common rail 12 has a function as a pressure accumulation chamber for maintaining (accumulating) to a predetermined pressure the high pressure fuel fed from the supply pump 11 and for distributing the pressure-accumulated fuel to each fuel injection valve 13. The fuel injection valve 13 is an electromagnetic valve provided with an electromagnetic solenoid (not shown) in its interior to suitably open for injecting and feeding the fuel into the combustion chamber 20.

On the other hand, the supply pump 11 feeds a part of the fuel, which is pumped up from the fuel tank, to the fuel adjunction nozzle 17 through the adjunction fuel passage P2. The blocking valve 14 and the regulator valve 16 are disposed in order toward the fuel adjunction nozzle 17 from the supply pump 11 in the adjunction fuel passage P2. The blocking valve 14 blocks the adjunction fuel passage P2 in case of emergency to stop the feed of the fuel. The regulator valve 16 controls the pressure of the fuel (fuel pressure) to be fed to the fuel adjunction nozzle 17. The fuel adjunction nozzle 17 is a mechanical valve that is opened for feeding the fuel to the exhaust system 40 when a fuel pressure is applied thereto at a predetermined pressure or more (for example 0.2 Mpa). Namely, the fuel pressure upstream of the fuel adjunction nozzle 17 is controlled by the regulator valve 16 so that the predetermined amount of fuel is injected and fed (added) at a suitable timing by the fuel adjunction nozzle 17.

The intake system 30 forms a passage (intake passage) for intake air to be fed to each fuel combustion chamber 20. On the other hand, the exhaust system 40 forms a passage (exhaust passage) for exhaust gas to be discharged from each combustion chamber 20.

A well-known supercharger (turbocharger) 50 is provided in this engine 1. The turbocharger 50 is provided with two turbine wheels 52 and 53 coupled through a shaft 51. One turbine wheel (turbine wheel on the intake side) 52 is exposed to the intake air within the intake system 30, whereas the other turbine wheel (turbine wheel on the exhaust gas side) 53 is exposed to the exhaust gas within the exhaust system 40. The turbocharger 50 with such a constitution performs a so-called supercharge for increasing the intake pressure by rotating the turbine wheel 53 on the intake side by utilizing the exhaust gas flow (exhaust gas pressure) received by the turbine wheel 52 on the exhaust gas side.

In the intake system 30, an intercooler 31 provided in the turbocharger 50 forcibly cools the intake air whose temperature has been elevated by the supercharge. A throttle valve 32 provided downstream of the intercooler 31 is an electronic controlled opening/closing valve that can adjust its opening degree in a stepless stage with a function for throttling a flow path area of the intake air under a predetermined condition, thereby regulating (reducing) the feed amount of the intake air.

Also, an exhaust gas recirculation passage (EGR passage) 60 bypassing the upstream (intake system 30) and the downstream (exhaust system 40) of the combustion chambers 20 is formed in the engine 1. This EGR passage 60 has a function to suitably return a part of the exhaust gas back to the intake system 30. In the EGR passage 60, there are provided an EGR valve 61 that is opened and closed in a stepless stage by the electronic control to suitably adjust the exhaust gas flow amount through the passage and an EGR cooler 62 for cooling the exhaust gas passing (recirculating) the EGR passage 60.

Also, an exhaust passage 40a, an NOx catalyst casing 42, an exhaust passage 40b, a filter casing 43 and an exhaust passage 40c are coupled in this order along the exhaust gas passage on the downstream side of a position where the exhaust side turbine wheel 52 is located in the exhaust system 40. An occlusion reduction type NOx catalyst for purifying harmful components such as NOx or the like contained in the exhaust gas is received in the NOx catalyst casing 42. Also, a particulate filter for purifying particulate matters such as smoke or the like contained in the exhaust gas together with the harmful components such as NOx or the like is received in the filter casing 43.

Also, various sensors are mounted in various positions of the engine 1 for outputting signals relating to the environmental conditions of the various positions or the operating condition of the engine 1.

Namely, a rail pressure sensor 70 outputs a detection signal in response to the pressure of fuel accumulated within the common rail 12. A fuel pressure sensor 71 outputs a detection signal in response to a pressure (fuel pressure) Pg of fuel to be introduced into the regulator valve 16 out of the fuel flowing through the fuel adjunction passage P2. An air flow meter 72 outputs a detection signal in response to a flow amount (intake flow amount) Ga of the. intake air downstream of the throttle valve 32 within the intake system 30. An air/fuel ratio (A/F) sensor 73 outputs a detection signal changing continuously in response to the oxygen concentration within the exhaust gas downstream of the catalyst casing 42 of the exhaust system 40. An exhaust gas temperature sensor 74 outputs a detection signal in response to a temperature (exhaust gas temperature) TEX of the exhaust gas downstream of the catalyst casing 42 of the exhaust system 40 in the same manner. A NOx sensor 75 outputs a detection signal changing continuously in response to the NOx concentration within the exhaust gas downstream of the catalyst casing 42 of the exhaust system 40 in the same manner.

Also, an accelerator opening degree sensor 76 is mounted on an accelerator pedal (not shown) of the engine 1 for outputting a detection signal in response to a step-in amount ACC to the pedal. A crank angle sensor 77 outputs a detection signal (pulse) at every constant angular rotation of an output shaft (crank shaft) of the engine 1. These sensors 70 to 77 are electrically connected to an electronic control unit (ECU) 80.

The ECU 80 is provided with a logic calculation circuit composed by connecting through bi-directional bus a central processing unit (CPU), a read only memory (ROM), a random access memory (RAM), a backup RAM, a timer counter or the like and an external input circuit and an external output circuit including an A/D converter.

The ECU 80 receives the detection signals of the above-described various sensors through the external input circuit to perform the basic control with respect to the fuel injection or the like of the engine 1 on the basis of these signals, and additionally to perform the various controls with respect to the operating conditions of the engine 1 such as the reducing agent (fuel) adjunction control with respect to the decision or the like of the adjunction timing or the feed amount of reducing agent (fuel functioning as the reducing agent) adjunction.

Incidentally, the exhaust gas purifying system of the engine 1 according to this embodiment is consisted of the fuel supply system 10 provided with the function to add the fuel to the exhaust system 40 through the fuel adjunction nozzle 17 in addition to the function to feed the fuel to each cylinder through the fuel injection valve 13, the particulate filter or the NOx catalyst provided in the exhaust system 40 and the ECU 80 or the like for controlling the function of the fuel supply system 10 and the NOx catalyst and the particulate filter. The above-described fuel adjunction control or the like is performed through the operation of each member or component constituting this exhaust gas purifying system including the ECU 80 outputting the command signals for controlling them.

Then, the structure and the function with respect to the catalyst casing 42 and the filter casing 43 provided in the exhaust system 40 out of the constituents of the engine 1 described above will be described in more detail.

<Function of Catalyst Casing>

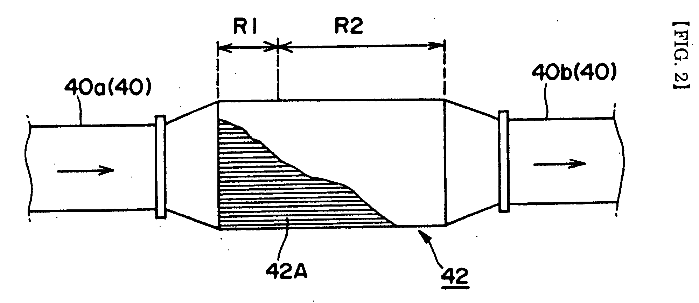

Fig. 2 is an enlarged side view of the catalyst casing 42 shown in Fig. 1 with a part of its internal structure. The catalyst casing 42 receives in its interior an occlusion reduction type NOx catalyst (hereinafter referred to as an NOx catalyst) 42A.

The NOx catalyst 42A is constituted by using as a carrier a honeycomb-shaped structure made mainly of, for example, alumina ($Al_2O_3$) and carrying, for example, alkaline metal such as potassium (K), sodium (Na), lithium (Li) or Cesium (Cs), alkaline earth such as barium (Ba) or calcium (Ca) or rare earth such as lanthanum (La) or yttrium (Y) functioning as NOx absorbent and precious metal such as platinum (Pt) functioning as oxidation catalyst (precious metal catalyst) on the surface of this structure (carrier).

Also, in particular, of the honeycomb-shaped structure constituting the NOx catalyst 42A, only the precious metal catalyst is carried in a predetermined range R1 located on the upstream side as the exhaust gas flow passage and the NOx absorbent is not carried. On the other hand, of the honeycomb-shaped structure constituting the NOx catalyst 42A, both the precious metal catalyst and the NOx absorbent are carried at a predetermined density in a predetermined range R2 located on the downstream side as the exhaust gas flow passage.

The NOx absorbent has the characteristics to absorb the NOx under the condition that the oxygen concentration in the exhaust gas is high, and to discharge the NOx under the condition that the oxygen concentration in the exhaust gas is low. Also, when the NOx is discharged into the exhaust gas, if there is HC or CO or the like in the exhaust gas, the oxidation reaction of HC or CO is accelerated by the precious metal catalyst so that the oxidation reduction reaction takes place between both using NOx as an oxidation component and HC or CO as a reduction component. Namely, HC or CO is oxidized into $CO_2$ or $H_2O$ and NOx is reduced into $N_2$.

On the other hand, even if the oxygen concentration in the exhaust gas is high, when the NOx catalyst absorbs a predetermined limit amount of NOx, the catalyst no longer absorbs the $NO_x$. In the engine 1, the reducing agent (fuel in this embodiment) is added and fed to the upstream side of the catalyst casing 42 of the exhaust gas passage through the fuel adjunction nozzle 17 before the NOx absorbent amount of the NOx catalyst 42A (NOx absorbent) within the catalyst casing 42 has reached the limit amount whereby the NOx absorbed to the NOx catalyst is discharged and reduced and purified to repeat the control for restoring the NOx absorbing ability of the NOx catalyst thereby at a predetermined interval.

Also, the NOx catalyst 42A has the portion that does not carry the NOx absorbent but carries only the precious metal catalyst in the predetermined range R1 located on the upstream side as the exhaust gas flow path. For this reason, when the reducing agent flows into the catalyst casing 42 from the exhaust gas passage 40a by adding and feeding the reducing agent through the fuel adjunction nozzle 17, upon passage of the range R1 of the NOx catalyst 42A, the reducing agent (HC component) in the exhaust gas is oxidized (decomposed) by the action of the precious metal catalyst. For example, the HC component having a high boiling point changes its characteristics to a component having a relatively low boiling point due to the action of the precious metal and then reaches the range R2. In the range R2, the NOx discharge of the NOx absorbent is accelerated by the HC component having the low boiling point. In the portion where the NOx absorbent and the precious metal catalyst are present in an admixed manner like the range R2, if NOx is discharged to the exhaust gas, the oxidization of HC or CO in the exhaust gas is accelerated by the precious metal catalyst, the oxidation reduction reaction using the NOx as the oxidation component and the HC or CO as the reduction component takes place between both as described above.

<Function of Filter Casing>

The filter casing 43 is provided on the downstream side of the catalyst casing 42 of the exhaust passage. In the filter casing 43, a particulate filter is provided for purifying the particulate matters such as smoke or the like contained in the exhaust gas together with harmful components such as NOx or the like.

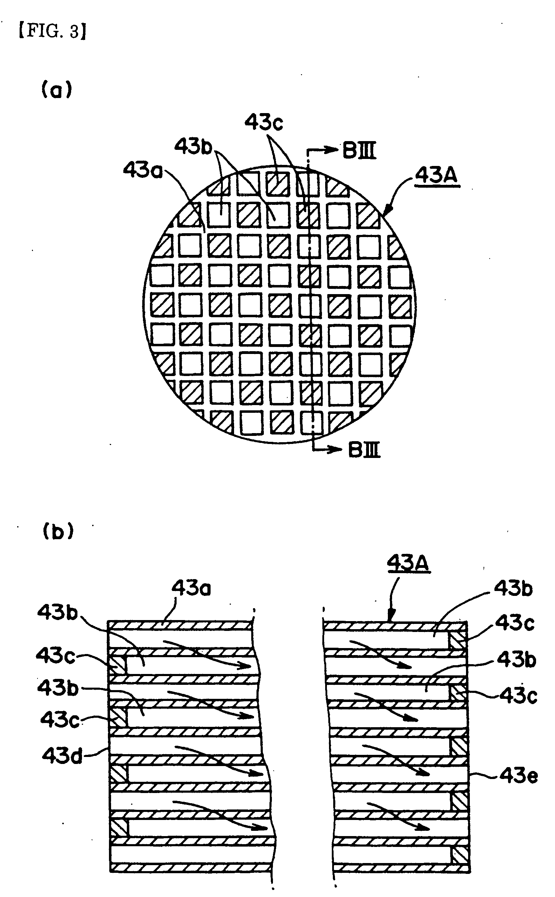

Fig. 3(a) is a front enventional view of a inlet of the exhaust gas (upstream end face) and Fig. 3(b) is a side sectional view showing the sectional structure (the section taken along a line of BIII-BIII) with respect to a part of the particulate filter.

As shown in Fig. 3(a), the particulate filter 43A is constituted by using as a carrier a honeycomb-shaped structure 43a partitioning and forming a plurality of passages 43b in the same manner as the catalyst casing 42 and by carrying NOx absorbent and precious metal catalyst on the surface of the carrier. However, unlike the structure within the catalyst casing 42, the particulate filter 43A is formed of a porous material for allowing the gas (exhaust gas) to pass therethrough (for example, wash coating of a coating material such as alumina, titania, zirconia or zeolite or the like to a ceramic material such as cordierite or the like) . In addition, one end of each passage 43b is closed by plug 43c and the other end is opened so that the exhaust gas introduced from the opening end of each passage 43b passes through the porous material forming the passage inner wall to enter the other adjacent passage to be discharged to the opening end of the other passage.

The particulate filter 43A having such the structure purifies the harmful components such as NOx or the particulate matters such as smoke or the like contained in the exhaust gas on the basis of the following mechanism.

The NOx absorbent performs repeatedly the absorption, discharge and purification of the NOx in response to the oxygen concentration or the reduction component amount in the exhaust gas in cooperation with the precious metal catalyst as described above. On the other hand, the NOx catalyst has the characteristics for forming active oxygen as a byproduct. When the exhaust gas passes through the particulate filter 43A, the particulate matters such as smoke or the like contained in the exhaust gas is trapped by the structure (porous material) 43a. Here, since the active oxygen generated by the NOx catalyst has an extremely high reactivity (activity) as the oxidizing agent, the particulate matters accumulated on the surface of the NOx catalyst or in the vicinity thereof out of the trapped particulate matters are rapidly reacted with the active oxygen (without any luminous flame) and purified.

<Basic Principle and Control Order of Fuel Adjunction Control>

Next, The basic principle and the control order of the fuel adjunction control or the like in accordance with this embodiment will be described.

In general, in a diesel engine, the oxygen concentration of the mixture of the fuel and air to be fed for the combustion in the combustion chambers is kept at a high concentration in almost all the operating range.

It is normal that the oxygen concentration of the mixture to be fed for the combustion is reflected to the oxygen concentration in the exhaust gas without any more change from a state of subtracting the oxygen fed to the combustion. If the oxygen concentration in the mixture (air/fuel ratio) is high, the oxygen concentration in the exhaust gas (air/fuel ratio) is also basically high in the same manner. On the other hand, as described above, if the oxygen concentration in the exhaust gas is high, the NOx catalyst absorbs the NOx and if the oxygen concentration in the exhaust gas is low, the NOx catalyst reduces the NOx into $NO_2$ or NO to discharge. Therefore, as far as the oxygen in the exhaust gas is kept in the high concentration condition, the NOx catalyst absorbs the NOx. However, the limit amount is present in the NOx absorbing amount of the NOx catalyst, under the condition that the NOx catalyst absorbs the limit amount of NOx, the NOx in the exhaust gas is not absorbed but passes through the catalyst casing.

Therefore, in the internal combustion engine provided with the fuel adjunction nozzle 17 like the engine 1, the fuel is added to the upstream of the NOx catalyst 42A of the exhaust system 40 through the fuel adjunction nozzle 17 at a suitable timing so that the oxygen concentration in the exhaust gas is temporary reduced and the reduction component amount (HC or the like) is increased. Then, the NOx catalyst 42A reduces NOx to $NO_2$ or NO and discharges it and restores (regenerates) its own NOx absorbing ability. The discharged $NO_2$ or NO reacts with HC or CO and is reduced to $N_2$ rapidly as described above.

At this time, in accordance with the NOx catalyst 42A that discharges and reduces and purifies the NOx absorbed in it, in the above-described mode, the efficiency of the reduction and purification for the NOx catalyst 42A is determined by the oxygen concentration (air/fuel ratio) and the reduction component amount (concentration of the fuel) in the exhaust gas introduced into the catalyst casing 42.

The ECU 80 of the engine 1 continuously observes the NOx concentration in the exhaust gas downstream of the NOx catalyst 42A on the basis of the output signal of the NOx sensor 75. The larger the NOx amount adsorbed to the NOx catalyst 42A, i.e., the closer to the maximum amount (saturated amount) of the NOx to be able to be adsorbed to the NOx catalyst 42 the NOx amount adsorbed to the NOx catalyst 42A, the lower the absorption ability (absorbing efficiency) of the NOx by the NOx catalyst 42A will become. Namely, when the occlusion amount of the NOx in the NOx catalyst 42A is increased, the concentration of the NOx discharged to the downstream side passing through the NOx catalyst 42A comes to increase. The sufficient mutual relationship is present in the transition mode of these two so that the occlusion amount of NOx in the NOx catalyst 42A can be known on the basis of the transition mode of the NOx concentration.

Therefore, the ECU 80 determines that the occlusion amount of NOx within the NOx catalyst 42A exceeds the predetermined amount when the NOx concentration downstream of the NOx catalyst 42A exceeds the predetermined level and adds the predetermined amount of fuel to the upstream of the NOx catalyst 42A of the exhaust system 40 to temporary increase the reduction component amount in the exhaust gas to be introduced into the catalyst casing 42 and to reduce the air/fuel ratio. The addition of the fuel to the upstream of the NOx catalyst 42A of the exhaust system 40 will hereinafter be simply referred to a fuel adjunction.

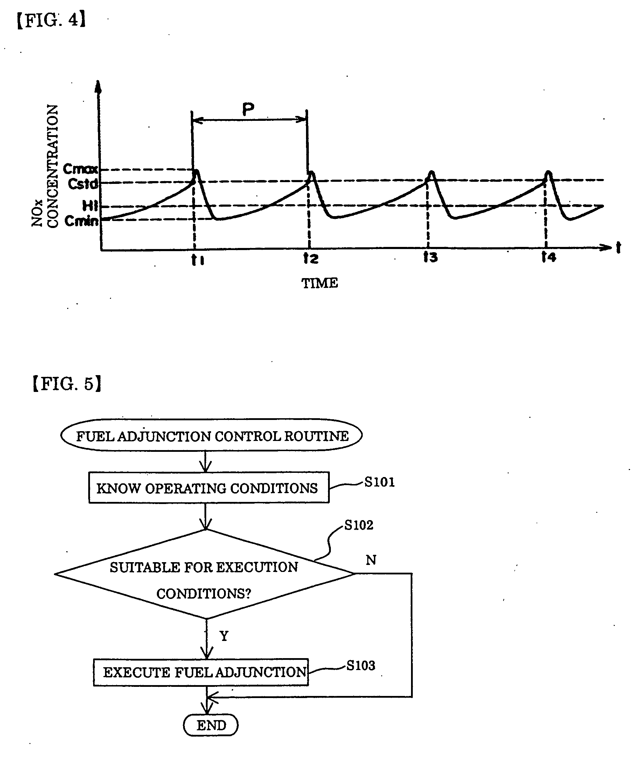

Fig. 4 is a time chart showing the transition of the NOx concentration in the exhaust gas to be observed in the downstream side of the NOx catalyst 42A in the case where the fuel adjunction is performed periodically. Incidentally, in Fig. 4, time t1, t2, t3 and t4 indicated on a time axis correspond to timing of the fuel adjunction being performed.

As shown in Fig. 4, the fuel adjunction is carried out when the NOx concentration in the exhaust gas to be observed on the downstream side of the NOx catalyst 42A is in the process of increasing and exceeds the standard value Cstd. When the fuel adjunction is carried out, the NOx concentration in the exhaust gas to be observed on the downstream side of the NOx catalyst 42A (hereinafter simply referred to as a NOx concentration) is temporary increased to reach a relatively small local maximum value and thereafter is rapidly decreased to reach a local minimum value. When the NOx concentration is gradually increased to again reach the standard value Cstd, the next fuel adjunction is to be carried out.

Hereinafter the specific processing order with respect to the "fuel adjunction control" to be carried out by the ECU 80 of the engine 1 according to this embodiment will be described with reference to the flowchart.

Fig. 5 shows the content of the process of the "fuel adjunction control routine" to be executed for controlling the adjunction amount or the adjunction timing for the fuel adjunction to the exhaust system 40. In this routine process, the execution is started simultaneously with the start of the engine 1 and repeated on a predetermined time interval through the ECU 80.

When the process advances to this routine, in step S101, the ECU 80 obtains the operating condition that is necessary to the control of the regulator valve 16 or the like relating to the execution of the fuel adjunction. For example, the ECU 80 calculates an engine revolution NE of the engine 1 on the basis of the output signal of the crank angle sensor 77 and the NOx concentration on the basis of the output signal of the NOx sensor 75. Also, the ECU 80 obtains the step-in amount ACC of the accelerator pedal, the exhaust temperature TEX or the like.

In step S102, the ECU 80 determines whether or not the inevitable conditions (necessary conditions) to execute the fuel adjunction are established with respect to the operating conditions of the engine 1. For example, the fact that the following conditions (1) and (2) are both established is necessary condition to execute the fuel adjunction.

(1) The exhaust temperature TEX exceeds the predetermined temperature (for example, 250°C). This corresponds to the condition that the NOx catalyst 42A is sufficiently activated.
(2) It is determined that the operating conditions of the engine 1 are suitable for the fuel adjunction in view of the relationship of the step-in amount ACC of the accelerator pedal and the engine revolution NE or the like.

If the above-described conditions (1) and (2) are both established, the ECU 80 advances to step S103. If either one of the conditions (1) or (2) is not established, the ECU 80 once escapes from the routine.

In step S103, the ECU 80 regulates the opening amount of the regulator valve 16 to execute the fuel adjunction through the fuel adjunction nozzle 17.

Here, the fuel ad junction amount (total amount) Q to be injected through the fuel adjunction nozzle 17 is determined by the following formula (i) basically as a function of the valve opening period T of the regulator valve 16 (ms) and the fuel pressure Pg given to the fuel adjunction nozzle through the valve opening fuel passage P2 when the regulator valve 16 is opened.

$$Q = f (T, Pg) \qquad (i)$$

Namely, the ECU 80 calculate the valve opening period T on the basis of the current fuel pressure Pg to be introduced to the regulator valve 16 out of the fuel passing through the fuel adjunction passage P2 so that the fuel of the added fuel amount Q determined as described above is injected and fed to the exhaust system 40. Then, the regulator valve 16 is supplied with current and controlled continuously or intermittently at a predetermined timing to be opened for total period (open period) T so that the fuel is injected in accordance with the adjunction pattern determined in the same manner as described above.

After the completion of the above process in the step S103, the ECU 80 once escapes the routine.

<Effect of Execution of Fuel Adjunction Control, etc.>

When there is increased a concentration of the HC component (reduction component) in the exhaust gas to be introduced into the catalyst casing 42 through the execution of the above-described fuel adjunction control, the exhaust gas having an increased concentration of the HC component is first passed through the upstream portion (range R1) of the NOx catalyst 42A. Here, only the precious metal catalyst is carried in the range R1 of the NOx catalyst 42A and the NOx absorbent is not carried therein. The precious metal catalyst is exposed solely to the exhaust gas to thereby enhance its oxidizing ability in comparison with the case where it is exposed to the exhaust gas in an admixed manner with the NOx absorbent and exhibits the tendency of the activation in a lower temperature. For this reason, when the HC component in the exhaust gas passes through the range R1 of the NOx catalyst 42A, the HC component has been effectively oxidized, after it has been decomposed into the HC component having a relatively low boiling point thereby, it has reached the downstream portion (range R2).

In the case where the material having any catalytic function to the component in the exhaust gas including the NOx catalyst according to this embodiment is provided in the midway of the exhaust gas passage, it is known that the downstream portion of the material having the catalytic function is more likely to be heated than the upstream portion.

For this reason, in the case where the exhaust gas having the increased concentration of the HC component is directly introduced into the NOx catalyst where the NOx absorbent and the precious metal catalyst are substantially uniformly distributed along the exhaust gas passage, for example, the HC component in the exhaust gas is stuck (accumulated) to the upstream portion (for example, an end face or a passage structure of the upstream side) kept under the condition of the relatively low temperature out of the structure forming the NOx catalyst. Accordingly, there is a fear that the upstream portion will be clogged.

In this respect, in the structure within the catalyst casing 42 according to this embodiment, the HC component having a high boiling point that is likely to form the particulate matters such as smoke or the like is oxidized and decomposed effectively in the upstream portion (region R1) of the NOx catalyst 42A having the high oxidizing ability and thereafter reaches the downstream portion (region R2). Then, the oxidized and decomposed HC component reacts effectively with the NOx discharged from the NOx absorbent in the downstreamportion (region R2) that is relatively likely to be heated. Namely, the harmful component in the exhaust gas including the NOx can be purified effectively for a long period of time.

Incidentally, it is possible to enjoy the similar effect of the embodiment of the present invention even if the distribution of the NOx absorbent is kept uniform over the full range of the NOx catalyst 42A but the carried amount of the precious metal catalyst in the upstream region (R1) is increased. However, it is more effective, in view of the cost, to adopt the structure where, in the range R1, the carried amount of NOx absorbent is reduced or the structure where the NOx absorbent is not carried as in the structure of the present embodiment.

(Second Embodiment)

Next, with respect to the second embodiment in which an exhaust gas purifying system for an internal combustion engine according to the present invention is applied to a diesel engine system, the different points from the above-described first embodiment will be described mainly. Even in the second embodiment, the basic structure of the engine system, the ECU and the electrical structure (Fig. 1) on the periphery thereof to which the invention are applied are substantially the same as those of the foregoing first embodiment. Accordingly, the same reference numerals are used to indicate the components having the same structure and function as those in the foregoing first embodiment. The duplication of the explanation therefor will be omitted here.

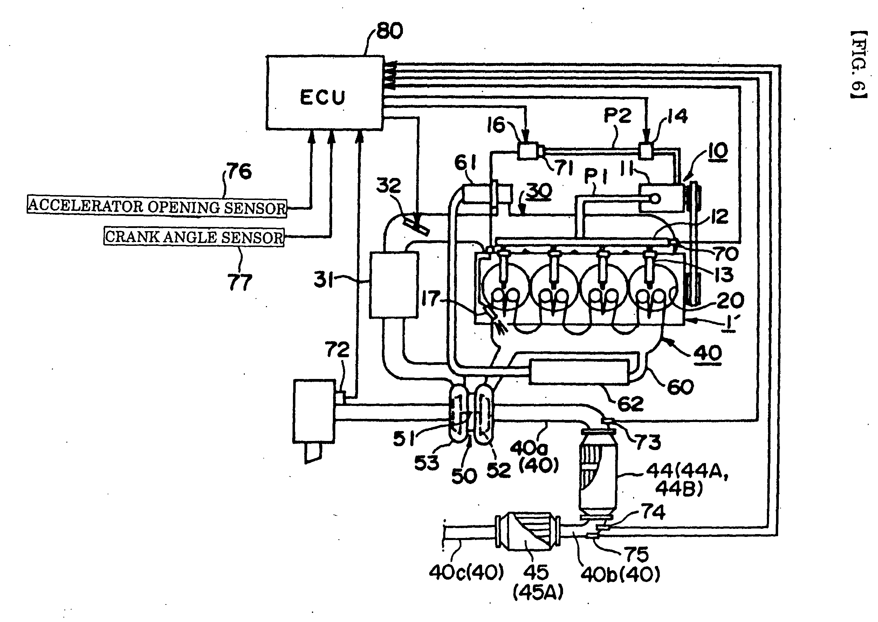

Fig. 6 shows a schematic structure of an engine (internal combustion engine) according to this embodiment.

As shown in Fig. 6, an engine 1' according to the second embodiment is different from the engine 1 (Fig. 1) according to the first embodiment in the point that a composite casing 44 is provided between an exhaust gas passage 40a and an exhaust gas passage 40b instead of the catalyst casing 42 receiving the NOx catalyst 42A. Also, the engine 1' according to the second embodiment is different from the engine 1 of the first embodiment in the point that an oxidation catalyst casing 45 is provided between the exhaust gas passage 40b and an exhaust gas passage 40c instead of the filter casing 43 received the particulate filter 43A.

<Function of Composite Catalyst Casing and Oxidation Catalyst Casing>

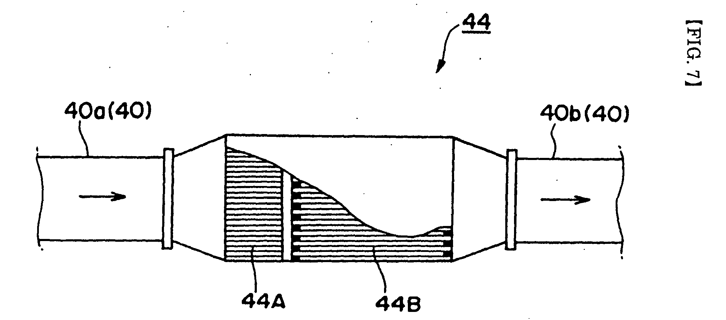

Fig. 7 is an enlarged side view of the composite catalyst casing 44 shown in Fig. 6 together with a part of its inner structure.

As shown in Fig. 7, the oxidation catalyst 44A (on the upstream side) and the particulate filter 44B (on the downstream side) are received together in the interior of the composite catalyst casing 44 along an exhaust gas flow path. For this reason, the exhaust gas introduced from the exhaust passage 40a to the composite catalyst casing 44 is first passed through the oxidation catalyst 44A and thereafter is introduced into the particulate filter 44B.

The oxidation catalyst 44A is composed of a honeycomb-shaped structure having a surface coated with precious metal such as Pd and Pt or the like and has a function to accelerate the oxidation of hydrocarbon (HC), carbon monoxide (CO) or nitrogen monoxide (NO) contained in the exhaust gas. Incidentally, the oxidation catalyst having the same function as that of the oxidation catalyst 44A is filled also in the oxidation catalyst casing 45.

Also, the particulate filter 44B has substantially the same structure and characteristics as those of the particulate filter 43A (see Figs. 1, 3(a) and 3(b)) described in the first embodiment.

Also, in the engine 1' according to the second embodiment, the ECU 80 for totally controlling the operating conditions of the engine 1' executes the fuel adjunction (fuel adjunction control) to the exhaust system 40 (the upstream of the composite catalyst casing 44) through the fuel adjunction nozzle 17 in accordance with the control order that is substantially the same as that of the foregoing first embodiment (see Figs. 4 and 5).

<Effect by Execution of Fuel Adjunction Control or the like>

When the concentration of the HC component (reduction component) in the exhaust gas introduced into the composite catalyst casing 44 through the execution of the above-described fuel adjunction control is increased, the exhaust gas whose concentration of the HC component has been increased is first passed through the upstream portion (oxidation catalyst 44A) within the composite catalyst casing 44. The HC component in the exhaust gas is effectively oxidized upon passage of the oxidation catalyst 44 and is decomposed into HC component or $CO_2$ or the like having a relative low boiling point. Thereafter, the exhaust gas reaches the particulate filter 44B in the downstream portion.

In the case where the material having any catalyst effect to the components in the exhaust gas (for example, particulate filter) is provided in the midway of the exhaust gas passage, the downstream portion of the material having the catalytic function is more likely to be heated than the upstream portion as described in the foregoing first embodiment.

Namely, in the case where the exhaust gas having the increased concentration of the HC component is directly introduced into the particulate filter 44B where the NOx absorbent and the precious metal catalyst are substantially uniformly distributed along the exhaust gas flow path, for example, the HC component in the exhaust gas is stuck (accumulated) to the upstream portion kept under the condition of the relatively low temperature out of the structure forming the particulate filter 44B (for example, an end face or a passage structure of the upstream side). Accordingly, there is a fear that the upstream portion would be clogged.

In this respect, in the structure within the composite catalyst casing 44 according to this embodiment, the HC component having a high boiling point that is likely to form the particulate matters such as smoke or the like is oxidized and decomposed effectively in the upstream portion (oxidation catalyst 44A) within the composite catalyst casing 44 having the high oxidizing ability and thereafter reaches the downstream portion (particulate filter 44B). Then, the oxidized and decomposed HC component reacts effectively with the NOx discharged from the NOx absorbent in the downstream portion (particulate filter 44B) that is relatively likely to be heated. Also, the heat (reaction heat) generated when the HC component is oxidized and decomposed in the upstream portion (oxidation catalyst 44A) is effectively diffused in the downstream portion, and thereby the particulate filter 44B as a whole is likely to be uniformly heated.

Namely, according to this embodiment, the clogging of the structure of the particulate filter 44B can effectively be suppressed and prevented (to enhance the durability of the particulate filter 44B) and the exhaust gas purification efficiency is also suitably enhanced.

Incidentally, the nitrogen monoxide (NO) contained in the exhaust gas is likely to be oxidized into nitrogen dioxide ($NO_2$) when the nitrogen monoxide passes through the oxidation catalyst 44A. On the other hand, the NOx absorbent carried on the structure of the particulate filter 44B has the characteristics to absorb the $NO_2$ out of the various nitrogen oxides with high efficiency. For this reason, the oxidation function of the NO by the oxidation catalyst 44B enhances the absorption efficiency of NOx by the NOx absorbent. Thus, also from this point of view, the ability of the exhaust gas purification by the particulate filter 44B will be enhanced due to the presence of the oxidation catalyst 44A in the upstream portion within the composite catalyst casing 44.

(Third Embodiment)

Next, with respect to the third embodiment in which an exhaust gas purifying system for an internal combustion engine according to the present invention is applied to a diesel engine system, the different points from the above-described first and second embodiments will be described mainly. Even in the third embodiment, the basic structure of the engine system, the ECU and the electrical structure (Fig. 1) on the periphery thereof to which the invention are applied are substantially the same as those of the foregoing first embodiment. Accordingly, the same reference numerals are used to indicate the components having the same structure and function as those in the foregoing first embodiment. The duplication of the explanation therefor will be omitted here.

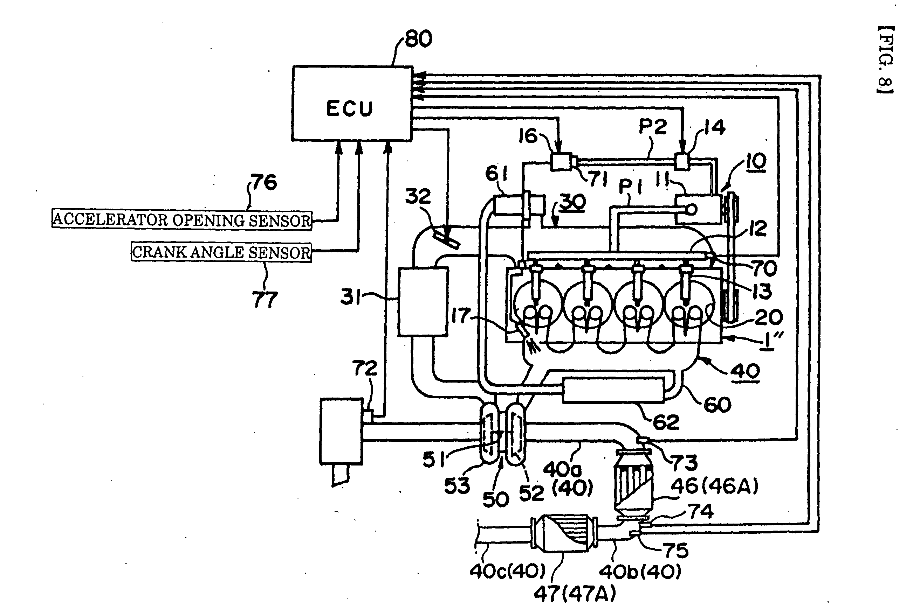

Fig. 8 shows a schematic structure of an engine (internal combustion engine) according to this embodiment.
As shown in Fig. 8, an engine 1" according to the third embodiment is different from the engine 1 (Fig. 1) according to the first embodiment in the point that a filter casing 46 is provided between an exhaust gas passage 40a and an exhaust gas passage 40b instead of the catalyst casing 42 receiving the NOx catalyst 42A. Also, the engine 1" according to the third embodiment is different from the engine 1 of the first embodiment in the point that an oxidation catalyst casing 47 is provided between the exhaust gas passage 40b and an exhaust gas passage 40c instead of the filter casing 43 received the particulate filter 43A.

<Function of Filter Casing and Oxidation Catalyst Casing>

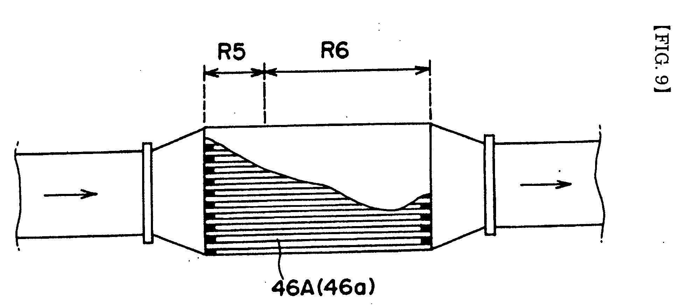

Fig. 9 is an enlarged side view of the filter catalyst casing 46 shown in Fig. 8 together with a part of its inner structure.

As shown in Fig. 9, the particulate filter 46A is received in the interior of the filter casing 46. The particulate filter 46A has substantially the same structure and characteristics as those of the particulate filter 43A (see Figs. 1, 3(a) and 3(b)) described in the first embodiment. The particulate filter 46A is different from the particulate filter 43A in accordance with the foregoing first embodiment in the point that both the NOx absorbent and the precious metal catalyst are both carried on the surface of the honeycomb-shaped structure 46a only in a predetermined range R6 on the downstream side along the exhaust gas flow path and only the precious metal catalyst is carried in a predetermined range R5 on the upstream side but the NOx absorbent is not carried in the range R5.

Incidentally, the oxidation catalyst 47A has substantially the same structure and characteristics as those of the oxidation catalysts 44A and 45A (see Figs. 1, 3(a) and 3(b)) described in the first embodiment.

Also, in the engine 1" according to the third embodiment, the ECU 80 for totally controlling the operating conditions of the engine 1" executes the fuel adjunction (fuel adjunction control) to the exhaust system 40 (the upstream of the filter casing 46) through the fuel adjunction nozzle 17 in accordance with the control order that is substantially the same as that of the foregoing first embodiment (see Figs. 4 and 5).

<Effect by Execution of Fuel Adjunction Control or the like>

When the concentration of the HC component (reduction component) in the exhaust gas introduced into the filter casing 46 through the execution of the above-described fuel adjunction control is increased, the exhaust gas whose concentration of the HC component has been increased is first passed through the upstream portion (range R5) where only the precious metal catalyst is carried within the filter casing 46. The HC component in the exhaust gas is effectively oxidized upon passage of the range R5 and is decomposed into HC component, $CO_2$ or the like having a relatively low boiling point. Thereafter, the exhaust gas reaches the downstream portion (range R6).

Namely, also in the structure of the filter casing 46 according to this embodiment, the HC component having a high boiling point that is likely to form the particulate matters such as smoke or the like is oxidized and decomposed effectively in the upstream region (the portion where only the precious metal is carried) within the filter casing 46 having the high oxidizing ability and thereafter reaches the downstream portion (the portion where the NOx catalyst and the precious metal catalyst are carried). Then, the oxidized and decomposed HC component reacts effectively with the NOx discharged from the NOx absorbent in the downstream portion that is relatively likely to be heated. Also, since the heat (reaction heat) generated when the HC component is oxidized and decomposed in the upstream portion (precious metal catalyst) is effectively diffused in the downstream portion, the particulate filter 46A as a whole is likely to be uniformly heated.

Namely, according to this embodiment, the clogging of the structure of the particulate filter 46A can suitably be suppressed and prevented (to enhance the durability of the particulate filter 46A) and the exhaust gas purification efficiency is also suitably enhanced.

For example, cerium oxide ($Ce_2O_3$) may be added to the NOx absorbent and the precious metal catalyst in the particulate filter that is used in each of the foregoing embodiments. Since $Ce_2O_3$ has an ability to temporarily hold the oxygen and discharge it as the active oxygen in response to the characteristics of the exhaust gas into which $Ce_2O_3$ is exposed, it is possible to accelerate the oxidation decomposition of the particulate matters such as smoke or the like due to the existence of $Ce_2O_3$.

Also, in each of the foregoing embodiments, the ECU 80 feeds the reducing agent to the exhaust system 40 through the fuel adjunction nozzle 17 on the basis of the detection signal of the NOx sensor 75. Instead of this, it is possible to determine the timing when the reducing agent is fed to the exhaust system 40 on the basis of the assumption of the NOx amount adsorbed on the NOx catalyst on the basis of the parameters relating to the other operating conditions. Also, it is possible to apply the control structure in which the feed of the reducing agent is performed for every predetermined period.

Also, in each of the foregoing embodiments, fuel (light oil) of the diesel engine is used as the reducing agent. If the material has the function for reducing the NOx as the reducing agent in the gas, any other reducing agent such as gasoline, kerosene or the like may be used.

Also, in each of the foregoing embodiments, there is applied a system structure where the supply pump 11 is used for feeding the fuel from the fuel tank to the common rail 12 and a part of the fuel pumped up by the supply pump 11 is added and fed into the exhaust system 40. However, the feeding system is not limited thereto but it is possible to apply a system structure with, for example, an independent feeding system for feeding the adjunction fuel from the fuel tank or other fuel (reducing agent) supply sources.

Also, in each of the foregoing embodiments, upon adjunction of the fuel to the exhaust system, there is applied a system structure where the pressure of the fuel fed through the adjunction fuel passage P2 is controlled by the regulator valve 16 and the opening/closing valve operation of the fuel adjunction nozzle 17 is controlled by its pressure control. In contrast, it is possible to apply an electromagnetic valve or the like, for example, as the fuel injection valve 13, whose opening/closing valve operation is directly controlled by the electric supply by the ECU 80 as the injection valve for performing the fuel adjunction.

Also, in addition to the fuel injection (main injection) in the vicinity of the compression top dead center for obtaining the engine output, it is possible to perform the fuel injection (injection in the rear stroke) following the main injection, for example, as a secondary injection at the suitably selected timing and for the suitably selected cylinder to perform as the fuel adjunction control the control for feeding the HC component contained in the fuel as the reduction component to the exhaust system 40.

Also, in each of the foregoing embodiments, the exhaust gas purifying system according to the present invention is applied to the diesel engine 1 having in-line four cylinders as an internal combustion engine. It is possible to suitably apply the present invention to a gasoline engine that performs the lean combustion. Also, the present invention is not limited to the application for the in-line four-cylinder internal combustion engine but may be applied to an internal combustion engine having any different number of the cylinders.

According to the present invention, in the inflow portion or the vicinity thereof for the exhaust gas to be introduced into the exhaust gas purifying catalyst, the reducing agent in the exhaust gas is oxidized (decomposed) effectively, so that the formation of the particulate matters such as smoke or the like is difficult in the inflow portion or the vicinity thereof. Accordingly, the clogging of the exhaust gas purifying catalyst due to the accumulation of the particulate matters or the like is suitably prevented or suppressed.

Also, in particular, the remarkable formation of the particulate matters is suppressed particularly in the inflow portion (upstream end) for the exhaust gas or the vicinity thereof of the exhaust gas purifying catalyst.

Also, since in the exhaust gas purifying catalyst having the honeycomb-shaped structure, there is no longer any fear that the particulate matters are accumulated on the upstream end face and thereby the upstream end face is clogged, it is possible to suitably maintain the purifying function of the exhaust gas by the exhaust gas purifying catalyst for a long period of time.

Also, the formation of the particulate matters in the exhaust gas is suppressed so that the function to prevent or suppress the clogging of the exhaust gas purifying catalyst is effectively performed.

**Claims**

1. An exhaust gas purifying system for an internal combustion engine, comprising:

   an exhaust gas purifying catalyst (42A, 46A) provided in an exhaust gas flow path (40a, 40b) of the internal combustion engine which carries, on a carrier, a NOx absorbent absorbing NOx in the exhaust gas in a case where an oxygen concentration in the exhaust gas is high and discharging an absorbed NOx in a case where the oxygen concentration is low, together with precious metal; and
a reduction component amount increasing means (11, 17) for increasing an amount of reduction components in the exhaust gas introduced into the exhaust gas purifying catalyst,

wherein a smaller amount of a carried NOx absorbent on the carrier is distributed on an upstream side along the exhaust gas flow path (40a, 40b) and a larger amount of the carried NOx absorbent on the carrier is distributed on a downstream side along the exhaust gas flow path (40a, 40b).

2. An exhaust gas purifying system for an internal combustion engine, comprising:

an exhaust gas purifying catalyst (42A, 46A) provided in an exhaust gas flow path (40a, 40b) of the internal combustion engine which carries, on a carrier, a NOx absorbent absorbing NOx in the exhaust gas in a case where an oxygen concentration in the exhaust gas is high and discharging an absorbed NOx in a case where the oxygen concentration is low, together with precious metal; and
a reduction component amount increasing means (11, 17) for increasing an amount of reduction components in the exhaust gas introduced into the exhaust gas purifying catalyst,

wherein, on the carrier, an amount of carried NOx absorbent is kept uniform but a larger amount of a carried precious metal is distributed on an upstream side along the exhaust gas flow path (40a, 40b) and a smaller amount of the carried precious metal is distributed on a downstream side along the exhaust gas flow path (40a, 40b).

3. An exhaust gas purifying system for an internal combustion engine, comprising:

an exhaust gas purifying catalyst (44B) provided in an exhaust gas flow path (40a, 40b) of the internal combustion engine which carries, on a carrier, a NOx absorbent absorbing NOx in the exhaust gas in a case where an oxygen concentration in the exhaust gas is high and discharging an absorbed NOx in a case where the oxygen concentration is low, together with precious metal;
an oxidation catalyst (44A) provided in an upstream of the exhaust gas purifying catalyst (44B) in the exhaust gas flow path (40a, 40b) and having a function to oxidize components in the exhaust gas; and
a reduction component amount increasing means (11, 17) for increasing an amount of reduction components in the exhaust gas introduced into the oxidation catalyst (44A).

4. An exhaust gas purifying system for an internal combustion engine according to any one of claims 1 to 3, wherein a carrier of the exhaust gas purifying catalyst (42A, 46A, 44B) is a honeycomb-shaped structure.

5. An exhaust gas purifying system for an internal combustion engine according to any one of claims 1 to 4, wherein the exhaust gas purifying system is not endowed with a function to collect particulate matters in the exhaust gas in an upstream of the exhaust gas purifying catalyst (42A, 46A, 44B) of the exhaust gas flow path (40a, 40b).

【FIG. 1】

【FIG. 2】

【FIG. 3】

(a)

(b)

【FIG. 4】

【FIG. 5】

【FIG. 6】

【FIG. 7】

【FIG. 8】

【FIG. 9】

[FIG. 10]

(a)

(b)